# EUROPEAN PATENT APPLICATION

(11) **EP 1 881 691 A2**
(43) Date of publication of application: **23.01.2008**
(21) Application number: 06125970.1
(22) Date of filing: 12.12.2006
(51) Int. Cl.: H04N 3/15

(54) **Apparatus and method for supplying image sensor driving signals**

(30) Priority: 18.07.2006 KR 20060067106
(71) Applicant: Samsung Electronics Co., Ltd., Suwon-si, Gyeonggi-Do (KR)
(72) Inventor: Joh, Seung-je, 16-408 Dormitory, Yeongtong-gu, Suwon-si, Gyeonggi-do (KR)
(74) Representative: Read, Matthew Charles

(57) **Abstract**

An apparatus and method of supplying driving signals to an image sensor are provided. The apparatus includes a driving signal generator generating two driving signals at one of a plurality of rates, a filtering unit filtering the driving signals in response to the plurality of rates, and a selector selecting the filtering result corresponding to the rate of the driving signals from the plurality of filtering results. Accordingly, the image sensor can stable operate even when the driving signals are applied to the image sensor at various rates.

## Description

The present invention relates to an apparatus and method for supplying image sensor driving signals including filtering the signals. More particularly, but not exclusively, the present invention relates to an apparatus and method of supplying driving signals controlling a charge transfer operation of an image sensor, such that cross points of the driving signals are disposed in a predetermined voltage range when the driving signals can possess a variety of different speed levels.

Image sensors transfer charges collected in photo-sensors (photoelectric transformation elements) using a CMOS or a CCD (Charge-Coupled Device). A CMOS sensor is used in portable image sensor devices because it can be constructed in a compact size due to its reduced power consumption. A CCD sensor is used in high definition cameras or in image reading apparatuses such as scanners and copiers, which require high picture quality. Even though the CCD sensor can provide high quality image sensing, the CCD sensor has increased power consumption and requires a biasing circuit and a driving signal generating circuit.

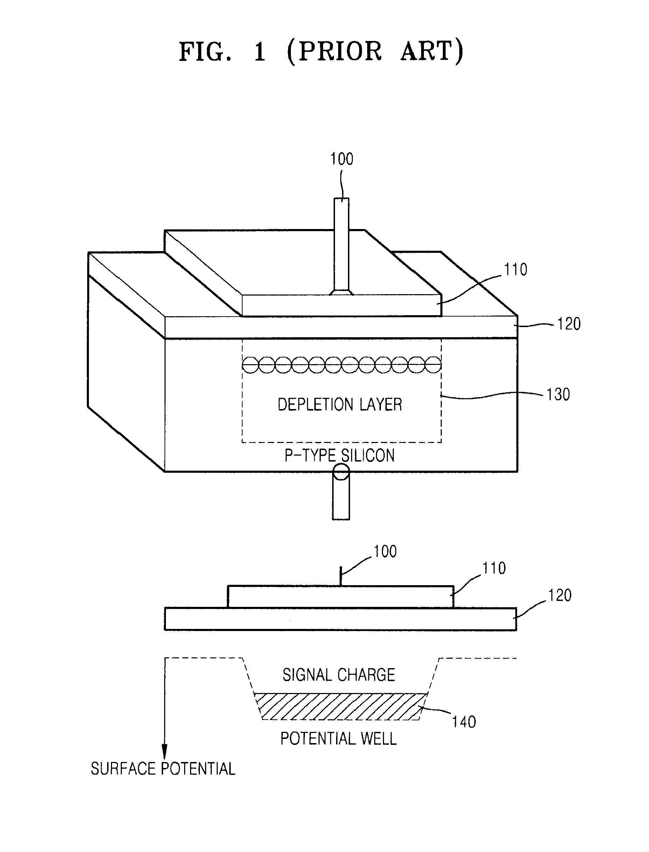

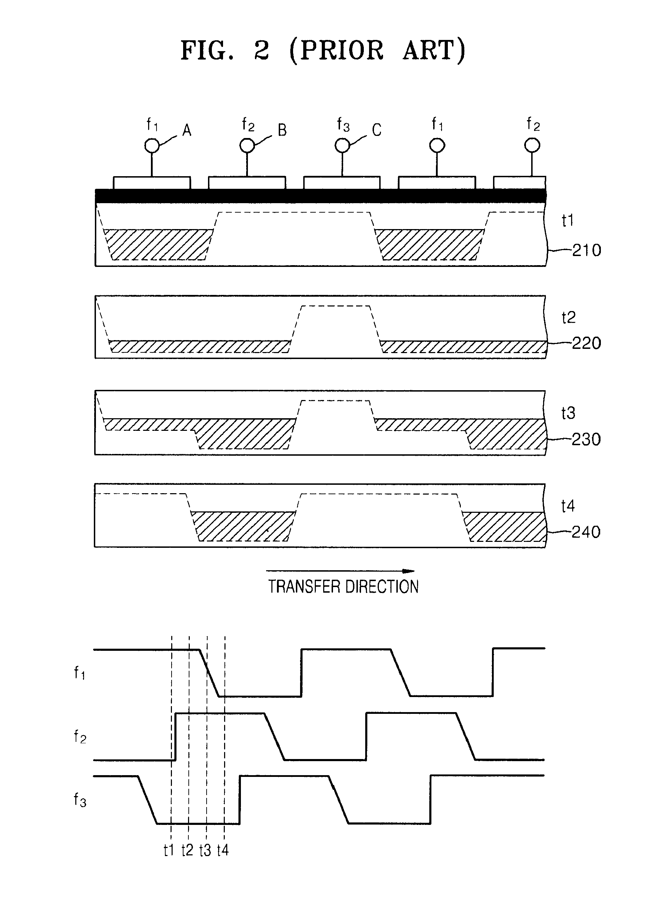

Figure 1 illustrates the internal structure of a conventional CCD sensor and Figure 2 is a diagram explaining the operating principle of the CCD sensor. To operate the CCD sensor, driving signals f1, f2 and f3 are organically supplied to pixels of the CCD sensor. Cross points of two predetermined driving signals among the driving signals function as an important operation specification in the CCD sensor. When the driving signals are at voltages of 0 through 5V, for example, the CCD sensor operates normally only when the cross points of the two predetermined driving signals are located in a voltage range including 1.5V. If the cross points of the driving signals do not satisfy this condition, the CCD sensor operates incorrectly or the reliability of values read from the CCD sensor can be decreased.

Driving signals of an image sensor are generally generated in a main board of an image reading apparatus and supplied to the image sensor through a cable connecting the main board to the image sensor. The waveform characteristics of the driving signals generated in the main board vary due to overshoot, undershoot, RF noise and an offset power variation when the driving signals are transmitted to the image sensor. As a result, the cross points of two predetermined driving signals cannot satisfy a predetermined operation specification of the image sensor when the driving signals arrive at the image sensor, and thus the image sensor does not operate normally. The severity of variations in the waveform characteristics of the driving signals increases as the rates of the driving signals increase. This increase occurs because the driving signals become vulnerable to noise when they are at a high rate. Accordingly, the image sensor filters the driving signals supplied by using a peripheral circuit such that the cross points of the driving signals satisfy the operation specification.

In a conventional image sensor, driving signals are supplied to the image sensor in a high-rate mode or a low-rate mode and the rate difference between the high-rate mode and the low-rate mode is small. Thus, the rate difference between the driving signals is not problematic. However, demands for reading images in high definition at a fast speed have been recently increased and thus the rate of driving signals in the high-rate mode for reading images at a fast speed has increased. As the rate difference between the high-rate mode and the low-rate mode is increased, it is difficult to construct a peripheral circuit of the image sensor such that the cross points of two driving signals are disposed in a predetermined voltage range in both the high-rate mode and the low-rate mode. That is, when the peripheral circuit is constructed such that the cross points of the two driving signals in the high-rate mode satisfy a predetermined operation specification, the cross points of the driving signals do not satisfy the specification when the driving signals are at a low rate. On the contrary, when the peripheral circuit is constructed such that cross points of two driving signals in the low-rate mode satisfy the operation specification, the cross points of the driving signals do not satisfy the specification when the driving signals are at a high rate.

Accordingly, there is a need for a peripheral circuit that allows the cross points of the driving signals to satisfy the operation specification in both the high-rate mode and the low-rate mode.

An aspect of exemplary embodiments of the present invention is to address at least the above problems and/or disadvantages and to provide at least the advantages described below. Accordingly, an aspect of exemplary embodiments of the present invention is to provide an apparatus and method for supplying driving signals to an image sensor, which allow cross points of two predetermined driving signals to be located in a predetermined voltage range to prevent the image sensor from operating incorrectly or from losing reliability even when the driving signals are supplied at various speeds to the image sensor.

According to the invention, there is provided an apparatus is for supplying driving signals to an image sensor to control a charge transfer operation of the image sensor, the apparatus comprises a driving signal generator, a filtering unit and a selector. The driving signal generator generates two driving signals at one of a plurality of speeds. The filtering unit filters the driving signals in response to the plurality of rates and a selector selects a filtering result corresponding to the speed of the driving signals from the plurality of filtering results.

The driving signals may correspond to a pair of clock signals that comprise opposite phases selected from a plurality of clock signals comprising the same speed.

The filtering unit may include a plurality of filters respectively corresponding to the plurality of speeds.

Each of the plurality of filters may remove noise from driving signals at a rate corresponding to the filter and control offsets of the driving signals such that cross points of the driving signal pair are located in a predetermined voltage range.

The driving signal generator may transmit the generated driving signals with information about the speed of the driving signals, and the selector may include multiplexers that select filtering results corresponding to the rate of the driving signals from the plurality of filtering results in response to the information about the rate of the driving signals.

According to the invention, there is also provided a method of supplying driving signals to an image sensor for controlling a charge transfer operation of the image sensor, the method comprising: generating two driving signals at one of a plurality of rates; filtering the driving signals in response to the plurality of rates to generate a plurality of filtering results; and selecting the filtering results corresponding to the rate of the driving signals from the plurality of filtering results.

The driving signals may correspond to a pair of clock signals with opposite phases selected from a plurality of clock signals with the same rate.

The filtering of the driving signals may comprise filtering the driving signals using a plurality of filters respectively corresponding to the plurality of rates.

Each of the plurality of filters may remove noise from driving signals at a rate corresponding to the filter and control offsets of the driving signals such that cross points of the driving signal pair are located in a predetermined voltage range.

According to the invention, there is also provided a computer program product comprising computer readable instructions that when executed by a processor causes the processor to perform the method specified above.

Embodiment of the invention will now be described, by way of example, with reference to the drawings, in which:
Figure 1 illustrates the internal structure of a conventional image sensor;
Figure 2 is a diagram explaining the operating principle of the image sensor;
Figure 3 is a diagram illustrating a cross point condition that driving signals of an image sensor must satisfy according to an exemplary embodiment of the present invention;
Figures 4A, 4B and 4C are diagrams illustrating an operation of filtering driving signals at a high rate in order to supply the driving signals to an image sensor according to an exemplary embodiment of the present invention;
Figures 5A, 5B and 5C are diagrams illustrating an operation of filtering driving signals at a low rate in order to supply the driving signals to an image sensor according to an exemplary embodiment of the present invention;
Figure 6 is a block diagram of an apparatus for supplying driving signals to an image sensor according to an exemplary embodiment of the present invention;
Figure 7A illustrates transmission of driving signals in the apparatus for supplying the driving signals to an image sensor according to an exemplary embodiment of the present invention;
Figure 7B is a circuit diagram of the filtering unit and the selector illustrated in Figure 7A; and
Figure 8 is a flow chart of a method of supplying driving signals to an image sensor according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention as defined by the appended claims. Also, descriptions of well-known functions and constructions are omitted for clarity and conciseness.

The internal structure and the operating principle of a CCD sensor will be explained with reference to Figures 1 and 2. Figure 1 illustrates the internal structure of a CCD sensor having a lead 100 and corresponding electrode 110, an n+ semiconductor layer 120 and p-type silicon substrate in which a depletion layer 130 is formed. When light is input to a photodiode, charges are generated in an n+ semiconductor layer 120 and stored in a potential well 140 under the photodiode. The potential well 140 is surrounded by left and right walls. The photodiode is reset through a pixel reset gate before an image is read. Specifically, the left wall of the photodiode is removed so that the stored charges drain out. When light is input to the photodiode after the photodiode is reset, new charges are stored in the potential well of the photodiode. The right wall of the photodiode well is removed after light is input to the photodiode, to transfer the newly stored charges to a potential well 140 of the CCD sensor. When driving signals are applied to electrode gates of the CCD sensor, the charges transferred to the CCD sensor are transferred in one direction and read. The quantity of the read charges is converted into a digital value by an analog-to-digital converter and stored in a memory.

Figure 2 illustrates an operation of applying driving signals to electrode gates of the CCD sensor to serially read charges transferred to the CCD sensor. In Figure 2, f1, f2 and f3 denote driving signals applied to electrodes connected to respective pixels of the CCD sensor. When a high voltage is applied to the electrodes of the respective pixels of the CCD sensor, potential wells capable of storing charges are formed under the electrodes. Reference numerals 210 through 240 represent potential wells formed in pixels of the CCD sensor with the lapse of time and charges stored in the potential wells. Referring to Figure 2, the charges stored in the CCD sensor are transferred to the right with the lapse of time. At a time t1, the driving signals f1, f2 and f3 are at high, low and low voltages, respectively. Accordingly, a potential well is formed in the first pixel to which a high voltage is applied and charges are stored in the potential well. At a time t2, the driving signal f2 is passed to a high voltage. Thus, a potential well is formed in the second pixel so that the barrier between the first and second pixels collapses. Accordingly, the charges stored in the first pixel are transferred to the second pixel. At a time t3, the driving signal f1 is at a voltage between the high and low voltages, and thus a potential well having an intermediate potential is formed. At a time t4, the driving signal f1 is passed to a low voltage so that the potential well of the first pixel becomes shallow and the depth of the potential well of the second pixel increases. According to an exemplary implementation, all the charges stored in the first pixel are transferred to the second pixel. In this manner, the charges are sequentially transferred from the first pixel through the second pixel to the third pixel and the quantity of transferred charges is read.

There are various methods of applying the driving signals to the CCD sensor in order to transfer charges in the CCD sensor. The example illustrated in Figure 2 is a 3-phase mode method that applies three driving signals having the same rate but different phases to the CCD sensor to drive the CCD sensor. Other methods include a method of applying two driving signals having different phases and a method of applying four driving signals having different phases.

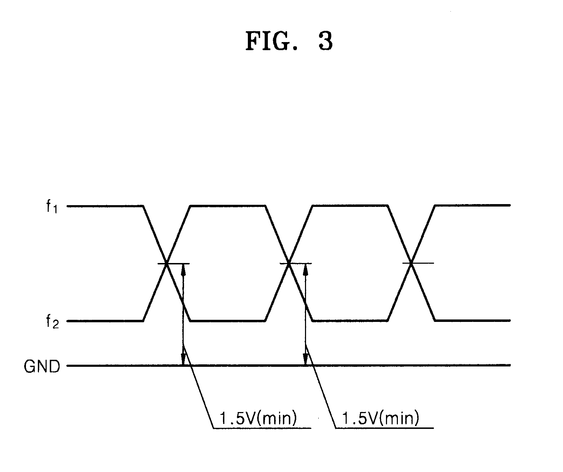

Driving signals must be organically supplied to electrodes of the CCD sensor in order to normally operate the CCD sensor. One of conditions of organically applying the driving signals to the CCD sensor is that cross points of the driving signals must be located in a predetermined voltage range. Cross points of two predetermined driving signals among a plurality of driving signals applied to the CCD sensor having the same rate but different phases, must be located in a predetermined voltage range. In particular, cross points of two driving signals having opposite phases must be located in the predetermined voltage range. Figure 3 illustrates driving signals that satisfy the cross point condition. Referring to Figure 3, cross points of two driving signals with opposite phases are located in a predetermined voltage range to meet a predetermined operation specification of the CCD sensor.

Driving signals of an image sensor included in an image reading apparatus are generated in a main board. The main board of the image reading apparatus is considerably distant from the image sensor so that the driving signals are transmitted from the main board to the image sensor through a cable having a considerable length. Therefore, a large amount of noise is generated due to the cable or the board and an offset voltage is varied. Accordingly, cross points of the driving signals can only be disposed in a predetermined voltage range when the noise is removed from the driving signals and the offset voltage is adjusted. Therefore, the noise must be removed from the driving signals that have to satisfy the cross point condition. The offset voltage is also adjusted to locate the cross points in the predetermined voltage range before the driving signals are transmitted to the CCD sensor.

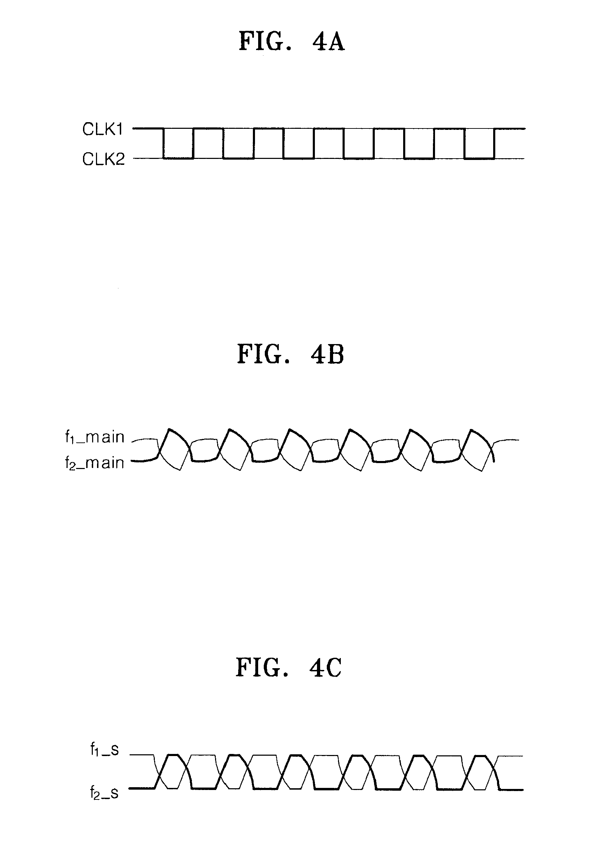

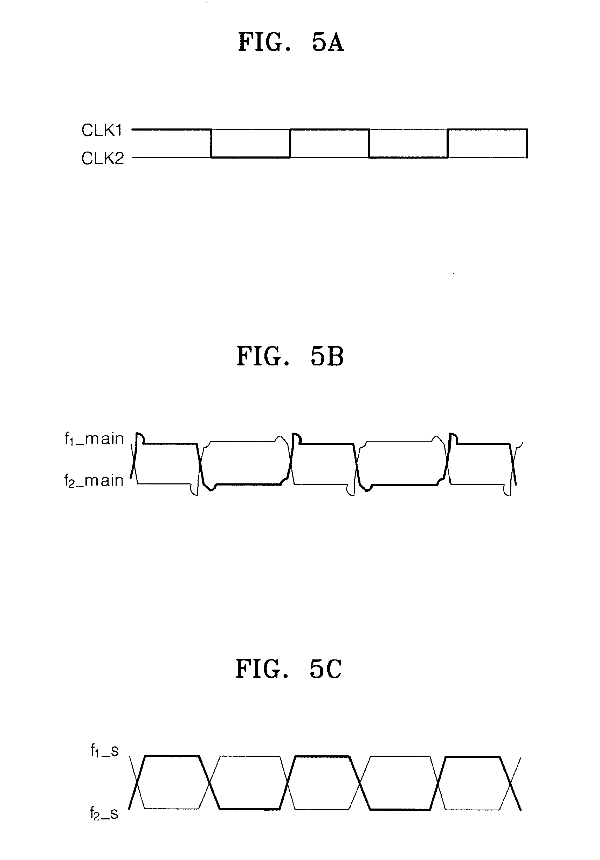

Noise that is generated due to the cable or the board depends on the rate of the driving signals supplied to the image sensor. Figures 4A and 5A illustrate waveforms of two driving signals, which are generated in a main board. The driving signals illustrated in Figure 4A have a rate of 15MHz, and the driving signals illustrated in Figure 5A have a rate of 3MHz. While the main board can generate more than two clock signals, only two predetermined clock signals among the plurality of clock signals can be filtered to meet the cross point condition and supplied to an image sensor. According to an exemplary implementation, the two clock signals should have opposite phases.

Figures 4B and 5B illustrate waveforms of two driving signals, which have been deformed due to overshoot, undershoot, noise and offset variations, which are generated when the driving signals are transferred through a cable. While the driving signals at 3MHz, illustrated in Figure 5B, only have overshoot, undershoot and a small amount of RF noise, the driving signals at 15MHz, illustrated in Figure 4B, have severe RF noise and offset variations in addition to overshoot and undershoot.

As described above, the degree of influence of noise on the driving signals depends on the speed of the driving signals. Accordingly, when the driving signals are filtered, noise is required to be removed and offset required to be controlled in response to the rate of the driving signals. For example, the driving signals at 3MHz and the driving signals at 15MHz have to be filtered by filters with different designs, respectively, in order to remove noise from the driving signals and control offset to locate cross points of the driving signals in a predetermined voltage range. If the driving signals at 15MHz are filtered by a filter designed to filter the driving signals at 3MHz, cross points of the driving signals at 15Mhz are not located in the predetermined voltage range. If the driving signals at 3MHz are filtered by a filter designed to filter the driving signals at 15MHz, cross points of the driving signals at 3Mhz are not located in the predetermined voltage range. Accordingly, when the driving signals have various rates, the cross points of the driving signals can be located in the predetermined voltage range and an image sensor receiving the driving signals can only be stably operated when the driving signals are filtered by a filter which is designed based on the rate of the driving signals.

A peripheral circuit for filtering the driving signals in order to locate cross points of the driving signals in a predetermined voltage range can be configured with ACT logic or with a passive element such as a resistor, an inductor or a capacitor. When the peripheral circuit is composed of a passive element, the peripheral circuit can be easily constructed at a low cost.

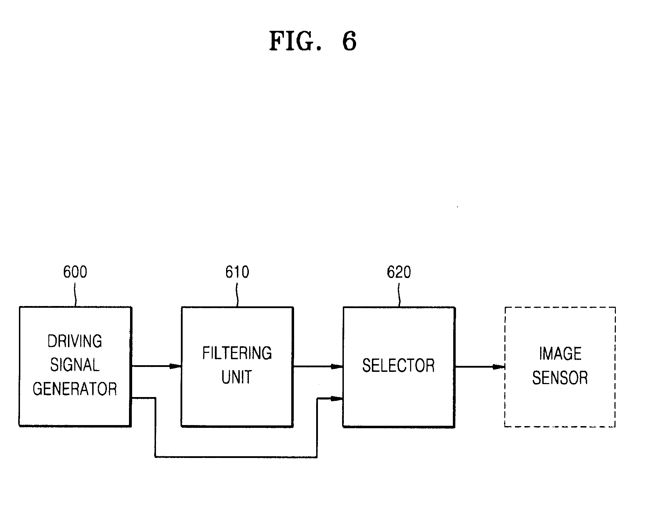

The configuration and operation of an apparatus for supplying driving signals to an image sensor will be explained with reference to Figure 6. Figure 6 is a block diagram of the apparatus for supplying driving signals to an image sensor according to an exemplary embodiment of the present invention. The apparatus for supplying driving signals to an image sensor includes a driving signal generator 600, a filtering unit 610, and a selector 620.

The driving signal generator 600 generates two driving signals with a predetermined speed among a plurality of speeds and transmits the driving signals to the image sensor. The driving signal generator 600 can be included in a main board of an image reading apparatus including the image sensor operated by the driving signals. The driving signal generator 600 can generate a plurality of clock signals that have the same speed but different phases according to a driving signal operating condition set in response to the type and driving method of the image sensor. The two driving signals can be a predetermined pair of clock signals among the plurality of clock signals generated by the driving signal generator 600. That is, the driving signal generator 600 can generate first through Nth clock signals having the same rate but different phases and transmit only a predetermined clock signal pair required to satisfy a cross point condition to the filtering unit 610 in response to the type of image sensor and driving method of the image sensor, for example, first and second driving signals.

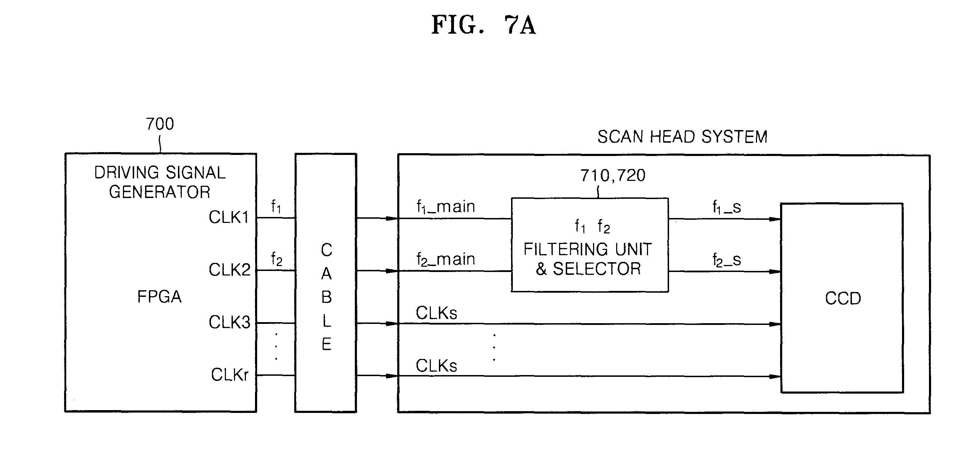

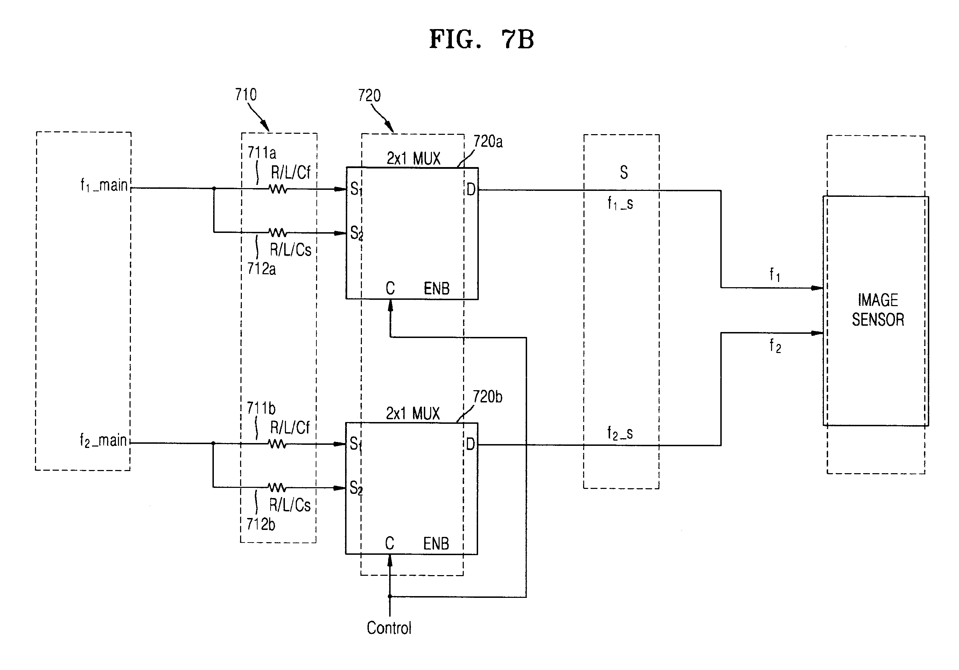

Figure 7A illustrates that only the first and second driving signals among the first through Nth driving signals generated by the driving signal generator 700 are transmitted to the filtering unit 710 (corresponding to the filtering unit 610 illustrated in Figure 6) and the selector 720 (corresponding to the selector 620 illustrated in Figure 6). Figure 7B is a block diagram of the filtering unit 710 and the selector 720 according to an exemplary embodiment of the present invention.

Cross points of the first and second driving signals must be located in a predetermined voltage range in order to normally operate the image sensor in the driving signal supply apparatus according to an exemplary embodiment of the present invention illustrated in Figures 7A and 7B, and the first and second driving signals can have a rate of 15MHz and 3MHz.

The driving signal generator 700 generates the first through Nth driving signals at 15MHz or 3MHz and transmits the first and second driving signals to the filtering unit 710 through a cable. The cable filters the first and second driving signals so the first and second driving signals satisfy a cross point condition. The driving signal generator 700 directly supplies the third through Nth driving signals to the image sensor through the cable.

Waveforms of the first and second driving signals are deformed due to noise when the first and second driving signals are transmitted through the cable. The degree to which the waveforms are deformed depends on the rate of the first and second driving signals. As illustrated in Figures 4B and 5B, when the first and second driving signals are at 3MHz, the waveforms of the first and second driving signals are slightly deformed due to overshoot, undershoot and small RF noise. However, when the first and second driving signals are at 15MHz, the waveforms of the first and second driving signals are severely deformed by offset variations in addition to overshoot, undershoot and RF noise.

The filtering unit 710 filters the first and second driving signals in response to the rate of the first and second driving signals. The filtering unit 710 can filter the first and second driving signals by using a plurality of filters. The plurality of filters respectively corresponds to a plurality of rates of the plurality of driving signals generated by the driving signal generator 700. Figure 7B illustrates a high-rate filter 711 for filtering the first and second driving signals in a high-rate mode corresponding to 15MHz and a low-rate filter 712 for filtering the first and second driving signals in a low-rate mode corresponding to 3MHz. According to an exemplary implementation, the filtering unit 710 includes a pair of high-rate filters 711a and 711b and a pair of low-rate filters 712a and 712b in order to respectively filter the first and second driving signals.

The high-rate filters 711a and 711b respectively remove noise from the first and second driving signals transmitted at 15MHz and control offsets such that cross points of the filtered first and second driving signals are located in a predetermined voltage range. The low-rate filters 712a and 712b respectively remove noise from the first and second driving signals transmitted at 3MHz and control offsets such that the cross points of the filtered first and second driving signals are located in the predetermined voltage range.

The waveforms of the first and second driving signals filtered by the high-rate filters 711a and 711b and the low-rate filters 712a and 712b depend on the rate of the first and second driving signals applied to the filtering unit 710. If the first and second driving signals are transmitted at 3MHz to the filtering unit 710, the cross points of the first and second driving signals filtered by the low-rate filters 712a and 712b are located in the predetermined voltage range. However, the cross points of the first and second driving signals filtered by the high-rate filters 711a and 711b are not located in the predetermined voltage range.

When the first and second driving signals are transmitted at 15MHz to the filtering unit 710, the cross points of the first and second driving signals filtered by the high-rate filters 711a and 711b are located in the predetermined voltage range. However, the cross points of the first and second driving signals filtered by the low-rate filters 712a and 712b are not located in the predetermined voltage range.

The plurality of filters that corresponds to the plurality of rates of the plurality of driving signals generated by the driving signal generator 700 respectively have filter coefficients determined by the rates of the respective filters. The filters can be configured with an active filter including a semiconductor device such as an ACT logic or a passive filter including a resistor, an inductor or a capacitor.

The selector 720 selects the first and second driving signals filtered by the filters corresponding to the rate of the first and second driving signals from the filtering results of the filtering unit 710. That is, the selector unit 720 selects the first and second driving signals filtered by the high-rate filters 711a and 711b when the first and second driving signals are transmitted at 15MHz and selects the first and second driving signals filtered by the low-rate filters 712a and 712b when the first and second driving signals are transmitted at 3MHz.

As illustrated in Figure 7B, the selector 720 can be configured with first and second multiplexers 720a and 720b that receive a control signal corresponding to the rate of the first and second driving signals. The selector 720 may select the filtering results of the filters corresponding to the rate of the first and second driving signals from the filtering results of the filtering unit 710 in response to the control signal, and may output the result of the selection. According to an exemplary implementation, the control signal that corresponds to the rate of the first and second driving signals is transmitted from the driving signal generator. The first multiplexer 720a selects the filtering result of the filter corresponding to the rate of the first driving signal from the filtering results of the filtering unit 710 and the second multiplexer 720b selects the filtering result of a filter corresponding to the rate of the second driving signal from the filtering results of the filtering unit 710.

The first and second driving signals may be transmitted in two modes such as the high-rate mode and the low-rate mode. A signal at a high level is applied to control terminals CONTROL of the first and second multiplexers 720a and 720b in the high-rate mode and a signal at a low level is applied to the control terminals CONTROL of the first and second multiplexers 720a and 720b in the low-rate mode to control the first and second multiplexers 720a and 720b to output the filtering results corresponding to the rate of the first and second driving signals.

As described above, the driving signal supply apparatus, according an exemplary embodiment of the present invention, is configured to generate driving signals at various rates, filter the driving signals of a specific rate of the various rates using filters that respectively correspond to the specific rate, select filtering results corresponding to the rate of the driving signals and supplie the results of the selection to the image sensor. Accordingly, even when the rate of the driving signals applied to the image sensor can vary, the cross points of the driving signals are located in a predetermined voltage range.

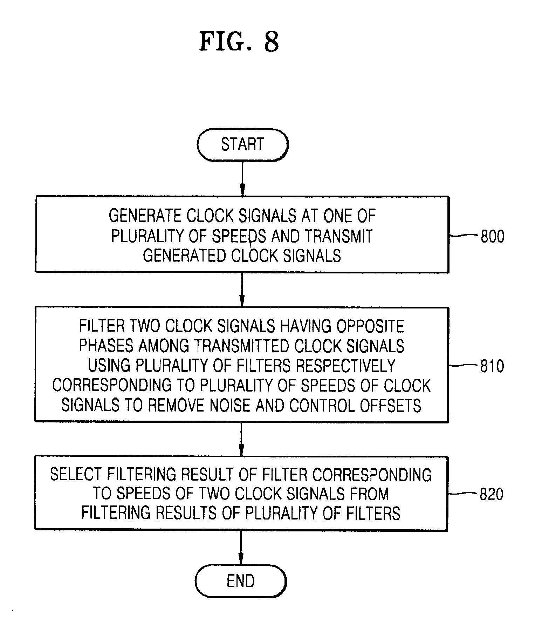

A method of supplying driving signals to an image sensor, according to an exemplary embodiment of the present invention, will now be explained with reference to Figure 8. In step 800, driving signals for controlling a charge transfer operation of the image sensor are generated. The driving signals may be a plurality of clock signals that comprise the same rate but different phases. The plurality of clock signals is transmitted to a filtering unit through a cable.

In step 810, two predetermined clock signals having opposite phases among the plurality of clock signals transmitted to the filtering unit are filtered by filters that respectively correspond to a plurality of rates of the clock signals to remove noise from the clock signals and control offset of the clock signals.

All the clock signals can be filtered by the filtering unit and then supplied to the image sensor in order to reduce cost. However, only the two clock signals determined according to the type and driving method of the image sensor can be filtered and supplied to the image sensor to satisfy a minimum condition required to normally operate the image sensor. According to an exemplary implementation, the two clock signals are a pair of clock signals with opposite phases.

Here, the filters filter two driving signals at one of a plurality of rates such that cross points of the filtered driving signals are located in a predetermined voltage range. The filter coefficients of the filters are determined according to the plurality of rates. The filters can remove noise from the driving signals and control offsets of the driving signals such that cross points of the driving signal can be located in the predetermined voltage range.

In step 820, the result of a filter corresponding to the rate of the transmitted clock signals is selected from the results of the plurality of filters that respectively correspond to the plurality of rates and are supplied to the image sensor.

As described above, the apparatus and method of supplying driving signals to an image sensor, according to an exemplary embodiment of the present invention, generate two driving signals such that cross points of the driving signals satisfy a predetermined operation specification, and supply the driving signals to an image sensor comprising a simple circuit configuration without using an expensive additional circuit even when the driving signals can be supplied at various rates to the image sensor. Accordingly, the image sensor can be stably operated at various speeds and reliability of images read by the image sensor can be secured.

The present invention can also be embodied as computer readable codes on a computer readable recording medium. The computer readable recording medium is a data storage device that can store data which can thereafter be read by a computer system. Examples of the computer readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths).

The computer readable recording medium can also be distributed over network-coupled computer systems so that the computer readable code is stored and executed in a distributed fashion. Also, functional programs, codes and code segments for accomplishing the present invention can be easily construed as within the scope of the invention by programmers skilled in the art to which the invention pertains.

While the present invention has been shown and described with reference to certain exemplary embodiments thereof, it will be understood by those skilled in the art that various changes in form and details may be made therein without departing from the scope of the invention as defined by the appended claims.

## Claims

1. An apparatus for supplying to an image sensor driving signals for controlling a charge transfer operation of the image sensor, the apparatus comprising:
a driving signal generator for generating two driving signals at one of a plurality of rates;
a filtering unit for filtering the driving signals in response to the plurality of rates to generate a plurality of filtering results; and
a selector for selecting a filtering result corresponding to the rate of the driving signals from the plurality of filtering results.

2. The apparatus of claim 1, wherein the driving signals correspond to a pair of clock signals comprising opposite phases selected from a plurality of clock signals comprising the same rate.

3. The apparatus of claim 1 or 2, wherein the filtering unit comprises a plurality of filters that respectively correspond to the plurality of rates.

4. The apparatus of claim 3, wherein each of the plurality of filters is configured to remove noise from driving signals at a rate corresponding to the filter and to control offsets of the driving signals so that cross points of the driving signal pair are located in a voltage range.

5. The apparatus of claim 3 or 4, wherein the plurality of filters comprises respective filter coefficients determined according to the rates of the respective filters.

6. The apparatus of claim 3, 4 or 5, wherein the plurality of filters comprise active filters.

7. The apparatus of claim 3, 4 or 5, wherein the plurality of filters comprise passive filters.

8. The apparatus of claim 7, wherein each of the passive filters comprises at least one of a resistor, an inductor and a capacitor.

9. The apparatus of any one of the preceding claims, wherein the driving signal generator is configured to transmit the generated driving signals with information regarding the rate of the driving signals, and the selector comprises multiplexers that are configured to select filtering results corresponding to the rate of the driving signals from the plurality of filtering results in response to the information regarding the rate of the driving signals.

10. A method of supplying to an image sensor driving signals for controlling a charge transfer operation of the image sensor, the method comprising:
generating two driving signals at one of a plurality of rates;
filtering the driving signals in response to the plurality of rates to generate a plurality of filtering results; and
selecting the filtering result corresponding to the rate of the driving signals from the plurality of filtering results.

11. The method of claim 10, wherein the driving signals correspond to a pair of clock signals comprising opposite phases selected from a plurality of clock signals comprising the same rate.

12. The method of claim 10 or 11, wherein the filtering of the driving signals comprises filtering the driving signals using a plurality of filters that respectively correspond to the plurality of rates.

13. The method of claim 12, wherein each of the plurality of filters removes noise from driving signals at a rate corresponding to the filter and controls offsets of the driving signals such that cross points of the driving signal pair are located in a voltage range.

14. A computer program comprising computer readable instructions that when executed by a processor causes the processor to perform the method of any one of claims 10 to 13.
